# EUROPÄISCHE PATENTANMELDUNG

(11) **EP 0 852 439 A2**
(43) Veröffentlichungstag der Anmeldung: **08.07.1998**
(21) Anmeldenummer: 97123021.4
(22) Anmeldetag: 31.12.1997
(51) Int. Cl.: H04L 27/20

(54) **"Vorrichtung für die Erzeugung und/oder den Empfang eines modulierten Funksignals"**

(30) Priorität: 07.01.1997 DE 19700249
(71) Anmelder: Meier, Helmut, 66620 Primstal (DE)
(72) Erfinder: Meier, Helmut, 66620 Primstal (DE)
(74) Vertreter: Bernhardt, Winfrid, Dr.-Ing.

(57) **Zusammenfassung**

Die Erfindung betrifft eine Vorrichtung für die Erzeugung und/oder den Empfang eines modulierten Sendesignals. Gemäß der Erfindung ist zur Modulation des Sendeträgersignals und/oder zur Erzeugung eines Frequenzreferenzsignals ein digital ansteuerbarer DDS-Baustein (3) vorgesehen. Die Erfindung ermöglicht eine direkte Modulation durch z.B. unmittelbar in einer Datenverarbeitungseinrichtung ermittelte numerische Werte und die erfindungsgemäße Vorrichtung eignet sich daher insbesondere zur Datenübertragung auf dem Funkwege. Darüber hinaus besteht die Möglichkeit der Korrektur von Abgleichfehlern eines verwendeten Referenzquarzes und von durch Temperaturänderungen verursachten Fehlern.

## Beschreibung

Die Erfindung betrifft eine Vorrichtung für die Erzeugung und/oder den Empfang eines modulierten Funksignals.

Ein bevorzugtes Anwendungsgebiet der Erfindung ist die Datenkommunikation zwischen mobilen und festen Sendestationen zellularer Funknetze, wie z.B. dem derzeit in Deutschland im Frequenzbereich zwischen 410 MHz und 430 MHz betriebenen Modacom-Netz. Die Datenübertragung erfolgt bei solchen Netzen vorrangig unter Frequenzmodulation des Trägersignals.

Es sind Vorrichtungen für die Erzeugung eines Sendesignals bekannt, die nach dem Synthesizerprinzip arbeiten. Dabei wird eine interne Referenzfrequenz erzeugt und mit der durch eine ganze Zahl m geteilten Frequenz des auszusendenden Trägersignals unter Bildung eines Abweichungssignals verglichen. Das Abweichungssignal wird einem das Trägersignal erzeugenden steuerbaren Oszillator über ein Schleifenfilter zur Einregelung der Trägersignalfrequenz auf die interne Referenzfrequenz zugeführt. Bei Verwendung einer zur Veränderung des Teilers m programmierbaren Frequenzteilereinrichtung können so unterschiedliche, einem ganzzahligen Vielfachen der internen Referenzfrequenz entsprechende Ausgangsfrequenzen des Trägersignals erzeugt werden. Typischerweise entspricht die Referenzfrequenz, z.B. 12,5 KHz, dem festgelegten Kanalraster des Funksystems. Die jeweiligen Sende- und Empfangsfrequenzen sind dann ganzzahlige Vielfache dieser Referenzfrequenz.

Die Modulation erfolgt bei solchen bekannten Synthesizern entweder durch Veränderung der Frequenz eines zur Erzeugung der internen Referenzfrequenz verwendeten Referenzschwingquarzes oder durch Veränderung einer Steuerspannung für den steuerbaren Oszillator. Im ersteren Fall muß die Grenzfrequenz des Schleifenfilters oberhalb der maximalen Modulationsfrequenz liegen, wenn die auf den Referenzschwingquarz einwirkende Modulation für alle Modulationsfrequenzen auf das Ausgangssignal des steuerbaren Oszillators durchgreifen soll. In letzterem Fall muß die Grenzfrequenz des Schleifenfilters unterhalb der minimalen Modulationsfrequenz liegen, wenn die Modulation durch die erfolgende Einregelung der Trägersignalfrequenz auf die interne Referenzfrequenz und umgekehrt die Einregelung durch die Modulation nicht gestört werden soll.

Bei den beschriebenen Modulationsverfahren wie auch bei häufig verwendeten Kombinationen dieser Verfahren ergeben sich also bestimmte Anforderungen an die Frequenzübertragungscharakteristik des in dem Regelkreis verwendeten Schleifenfilters, die mit dem zur Datenübertragung erforderlichen Modulationsfrequenzumfang im Einklang stehen müssen. Insbesondere der Möglichkeit einer linearen Modulation von sehr niedrigen Frequenzen an sind hierdurch Grenzen gesetzt.

Die vorliegende Erfindung schafft eine in bezug auf die Modulationsmöglichkeiten verbesserte Vorrichtung der eingangs erwähnten Art, die durch einen zur Modulation des Sendeträgersignals und/oder zur Erzeugung eines Frequenzreferenzsignals verwendeten, digital ansteuerbaren DDS-Baustein gekennzeichnet ist.

Ein als solcher bekannter DDS-Baustein kann in Abhängigkeit von eingegebenen numerischen Daten Signale mit nahezu beliebigen Frequenzen bis zur Hälfte seiner Taktfrequenz erzeugen. Die erfindungsgemäße Vorrichtung erlaubt somit eine direkte Modulation über z.B. in einem Rechner erzeugte oder/und bearbeitete digitale Information und ist daher insbesondere für die Übertragung alphanumerischer Daten geeignet. Das Modulationseingangssignal muß nicht als analoges Spannungssignal vorliegen. Die Modulation kann sehr genau entsprechend der mit solchen DDS-Bausteinen erzielbaren Frequenzauflösung von Werten kleiner als 1 Hz erfolgen.

In einer Ausführungsform der Erfindung ist eine den DDS-Baustein umfassende Einrichtung für die Erzeugung eines modulierten Frequenzreferenzsignals und eine einen Regelkreis mit einem steuerbaren Trägerfrequenzoszillator umfassende Einrichtung für die Erzeugung des Sendesignals basierend auf dem modulierten Frequenzreferenzsignal vorgesehen, wobei der Regelkreis ferner einen das modulierte Frequenzreferenzsignal und ein insbesondere frequenzgeteiltes Ausgangssignal des Tragerfrequenzgenerators empfangenden Phasenvergleicher für die Bildung eines auf den Trägersignalgenerator rückwirkenden Abweichungssignals sowie ein Schleifenfilter zur Filterung des Abweichungssignals umfaßt. Die Grenzfrequenz des Schleifenfilters liegt oberhalb der maximal erforderlichen Modulationsfrequenz. Somit greift die Modulation des Frequenzreferenzsignals auf das durch den über den Regelkreis gesteuerten Trägerfrequenzoszillator erzeugte Signal durch, das damit entsprechend moduliert ist und als Sendesignal verstärkt werden kann.

Vorzugsweise ist der DDS-Baustein mit dem Phasenvergleicher über ein typische Störsignale des DDS-Bausteins unterdrückendes Bandpaßfilter verbunden.

In einer weiteren Ausführungsform der Erfindung ist eine das Trägersignal erzeugende, insbesondere einen Quarzoszillator umfassende Oszillatoreinrichtung sowie eine Ausgangssignale des DDS-Bausteins empfangende, insbesondere zur Addition oder Subtraktion verwendete Mischereinrichtung vorgesehen, wobei jeweils der DDS-Baustein mit der Mischereinrichtung, die Oszillatoreinrichtung mit der Mischereinrichtung und die Mischereinrichtung ausgangseitig mit einem Leistungsverstärker über ein Bandpaßfilter verbunden ist, wobei eine geeignete Unterdrückung von Störsignalen erfolgt.

In weiterer vorteilhafter Ausgestaltung der Erfindung ist der DDS-Baustein mit einer einen Mikroprozessor umfassenden digitalen Eingabeeinrichtung verbunden, deren Mikroprozessor zur Kompensation von Fehlereinflüssen anhand vorab gespeicherter Korrekturwerte oder/und von aus empfangenen Funksignalen abgeleiteten Frequenzreferenzwerten programmiert ist. Fehler können sich vor allem durch die Exemplarstreuung oder unkorrekten Abgleich eines für den DDS-Baustein verwendeten Taktschwingquarzes und insbesondere dieser betreffende Taktschwingquarz Temperatureinflüsse ergeben. Exemplarstreuungen können durch quarzspezifisch gespeicherte Korrekturwerte eliminiert werden. Zur Temperaturkorrektur kann die im wesentlichen konstante Frequenz der festen Sendestationen zellularer Funknetze benutzt werden, indem z.B. periodisch aus empfangenen Signalen die Frequenzreferenzwerte zur Korrektur ermittelt werden.

Die Erfindung soll nun anhand von Ausführungsbeispielen und der beiliegenden, sich auf diese Ausführungsbeispiele beziehenden Zeichnungen näher erläutert und beschrieben werden. Es zeigen:
- Fig. 1: ein erstes Ausführungsbeispiel für eine erfindungsgemäße Sendevorrichtung, bei der mit Hilfe eines DDS-Bausteins ein moduliertes Frequenzrefenzsignal für eine Sendesignal-Erzeugungseinrichtung gebildet wird, und
- Fig. 2: ein zweites Ausführungsbeispiel für eine erfindungsgemäße Sendevorrichtung mit einer Mischereinrichtung, die unter Erzeugung eines Sendesignals ein Trägersignal mit Information enthaltenden Ausgangssignalen eines DDS-Bausteins mischt.

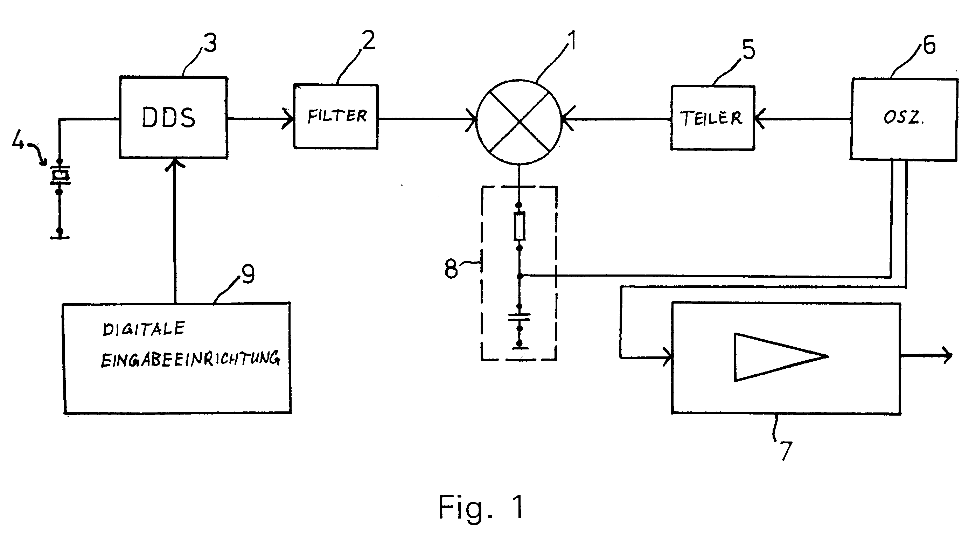

In der Fig. 1 ist mit dem Bezugszeichen 1 ein Phasenvergleicher bezeichnet, der an einem von zwei Eingängen über ein Bandpaßfilter 2 mit einem durch einen Quarzoszillator 4 getakteten DDS-Baustein 3 verbunden ist.

An seinem anderen Eingang ist der Phasenvergleicher 1 über eine Frequenzteilereinrichtung 5 mit einem spannungsgesteuerten Oszillator 6 verbunden, dessen Ausgangssignal über einen Ausgang der genannten Frequenzteilereinrichtung 5 und über einen anderen Ausgang einem Leistungsverstärker 7 zugeführt wird.

Der Ausgang des Phasenvergleichers 1 ist über ein Schleifenfilter 8 mit einem Eingang des spannungsgesteuerten Oszillators 6 verbunden.

Mit dem Bezugszeichen 9 ist in der Fig. 1 eine Einrichtung zur Eingabe digitaler Modulationsdaten in den DDS-Baustein 3 bezeichnet.

Bekanntermaßen erzeugt der DDS-Baustein als Ausgangssignal eine Sinusspannung, deren Frequenz über digitale, jeweils einem bestimmten Frequenzwert zugeordnete Eingabewerte gesteuert werden kann. Bis zur halben Taktfrequenz sind entsprechend einer Auflösung kleiner 1 Hz nahezu beliebige Frequenzen einstellbar.

Im Sendebetrieb erzeugt der DDS-Baustein 3 eine Referenzfrequenz, die in dem vorliegenden Ausführungsbeispiel bei etwa 7 MHz liegt.

Die Frequenzteilereinrichtung 5 ist auf einen Teilerwert von 64 eingestellt, so daß an dem Phasenvergleicher 1 nur 1/64 der Frequenz des Ausgangssignals des spannungsgesteuerten Oszillators 6 anliegt. Bei Einregelung des Oszillatorausgangssignals auf die genannte Referenzfrequenz mit Hilfe des durch den Phasenvergleicher 1 und das Schleifenfilter 8 gebildeten Regelkreises ergibt sich ein durch den Leistungsverstärker 7 zu verstärkendes Trägersignal mit einer Frequenz von etwa 450 MHz.

Über die Eingabeeinrichtung 9 werden in den DDS-Baustein 3 digitale Daten- oder/und Sprachinformation beinhaltende Modulationssignale eingegeben, die zu einer entsprechenden Frequenzänderung seines Ausgangssignals führen. Das so entsprechend der Information frequenzmodulierte Ausgangssignal des DDS-Bausteins 3 wird über das Bandpaßfilter 2 dem Phasenvergleicher 1 zugeleitet, wobei durch den Bandpaßfilter 2 für DDS-Bausteine typische Störsignale unterdrückt werden.

Das Schleifenfilter 8 weist eine oberhalb der höchsten, zur Modulation zu verwendenden Frequenz gelegene Grenzfrequenz und darüber hinaus eine solche Frequenz-Übertragungs-Charakteristik auf, daß bei entsprechend schneller Einregelung die Modulation der Referenzfrequenz nahezu linear auf die Frequenz des spannungsgesteuerten Oszillators durchgreift und so ein entsprechend frequenzmoduliertes Sendesignal gebildet wird.

Über die digitale Dateneingabeeinrichtung, die einen Mikrorechner enthalten oder mit einem solchen verbunden sein kann, lassen sich Übertragungskanäle in erforderlichem Frequenzabstand, z.B. 12,5 KHz, und erforderlicher Frequenzlage unabhängig vom Teilerwert der Frequenzteilereinrichtung 5 über den Mikrorechner einstellen, wobei insbesondere ein beim Überwechseln zwischen Sendegebieten eines zellularen Funknetzes erforderlicher Kanalwechsel in dieser Weise programmgesteuert erfolgen kann.

Über die digitale Dateneingabeeinrichtung 9 können ferner auf rechnerischem Wege Fehlerkompensationen von z.B. durch Exemplarstreuung des Taktschwingquarzes 4 und Temperatureinflüsse verursachten Frequenzfehlern durchgeführt werden. Ein hierfür erforderlicher Referenzfrequenzwert läßt sich z.B. periodisch aus einem von einer festen Sendestation eines zellularen Funknetzes empfangenen Signal ableiten. Durch diese Möglichkeiten zur rechnerischen Fehlerkompensation brauchen insbesondere an die Qualität des Taktschwingquarzes keine besonders hohen Anforderungen gestellt zu werden. Sollwertabweichungen können darüber hinaus vorab ermittelt und die Steuerdaten für den DDS-Baustein in Anpassung an das verwendete Schwingquarzexemplar entsprechend numerisch geändert werden.

Bei den über die digitale Eingabeeinrichtung eingebbaren Signalen handelt es sich insbesondere um Sprachsignale für allgemeine Kommunikations- oder Alarmierungszwecke, Datensignale von Computern, Telemetriedaten und -signale für telemetrietypische Aufgaben, Statusinformationen über Systeme, die in Servicedaten eingebunden sind, z.B. Daten aus Kraftfahrzeugen zu Servicezwecken, Füllstandsdaten aus Verkaufsautomaten und Daten über die Ladung von LKW's o.ä. Fahrzeugen.

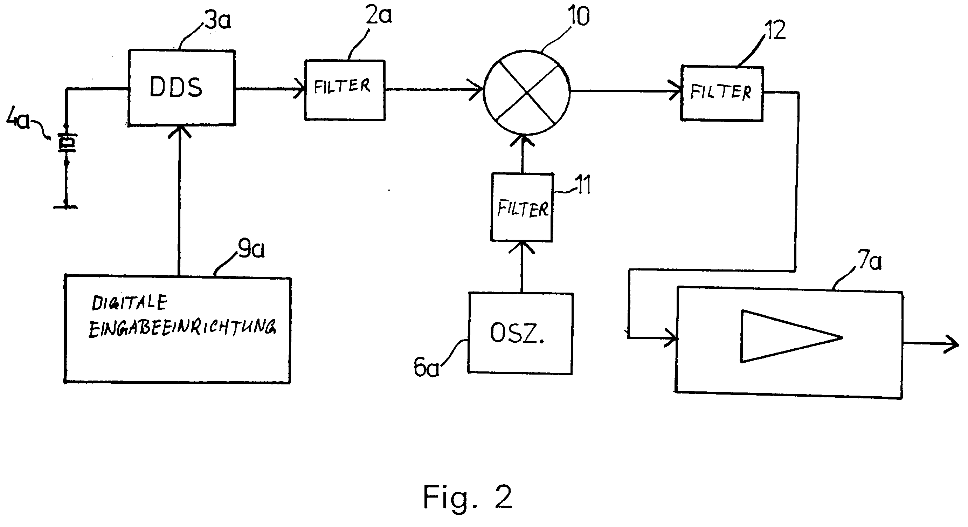

Es wird nun auf Fig. 2 Bezug genommen, wo gleiche oder gleichwirkende Einrichtungen mit derselben, jedoch mit dem Buchstaben a versehenen Bezugszahl bezeichnet sind.

Das in der Fig. 2 dargestellte Ausführungsbeispiel unterscheidet sich von dem vorangehenden Ausführungsbeispiel dadurch, daß das modulierte Ausgangssignal des DDS-Bausteins nicht als Referenzfrequenzwert für eine das eigentliche Sendesignal erzeugende Einrichtung dient, sondern einem durch einen Quarzoszillator 6a mit konstanter Frequenz erzeugten Trägersignal mit Hilfe einer Mischereinrichtung 10 unter Aufaddierung oder Subtraktion beigemischt wird.

Zur Unterdrückung von Störsignalen ist jeweils zwischen der Mischereinrichtung 10 und der Oszillatoreinrichtung 6a sowie zwischen der Mischereinrichtung 10 und einem Leistungsverstärker 7a ein Bandpaßfilter 11 bzw. 12 vorgesehen.

Die beschriebenen Vorrichtung zur Funksignalerzeugung können Bestandteil eines Transceivers sein, worin der gezeigte oder ein weiterer DDS-Baustein auch zur Erzeugung eines Frequenzreferenzsignals für den darin enthaltenen Empfänger dienen kann.

Der Quarzoszillator 4a und der Oszillator 6a können identisch sein. Ferner kann eine Vervielfachung der dem Filter 11 zugeführten Oszillatorfrequenz erfolgen.

## Patentansprüche

1. Vorrichtung für die Erzeugung und/oder den Empfang eines modulierten Sendesignals,
gekennzeichnet durch einen zur Modulation des Sendeträgersignals und/oder zur Erzeugung eines Frequenzreferenzsignals digital ansteuerbaren DDS-Baustein (3,3a).

2. Vorrichtung nach Anspruch 1,
gekennzeichnet durch eine den DDS-Baustein (3) umfassende Einrichtung für die Erzeugung eines modulierten Frequenzreferenzsignals und eine einen Regelkreis mit einem steuerbaren Trägerfrequenzoszillator (6) umfassende Einrichtung für die Erzeugung des Sendesignals basierend auf dem modulierten Frequenzreferenzsignal.

3. Vorrichtung nach Anspruch 2,
gekennzeichnet durch einen das modulierte Frequenzreferenzsignal und ein insbesondere frequenzgeteiltes Ausgangssignal des Trägerfrequenzoszillators (6) empfangenden Phasenvergleicher (1) für die Bildung eines auf den steuerbaren Trägersignaloszillator (6) rückwirkenden Abweichungssignals.

4. Vorrichtung nach Anspruch 3,
dadurch gekennzeichnet,
daß das Abweichungssignal auf den Trägerfrequenzoszillator (6) über ein Filter (8) rückwirkt.

5. Vorrichtung nach Anspruch 3 oder 4,
dadurch gekennzeichnet,
daß der DDS-Baustein (3) mit dem Phasenvergleicher (1) über ein Bandpaßfilter (2) verbunden ist.

6. Vorrichtung nach einem der Ansprüche 2 bis 5,
dadurch gekennzeichnet,
daß der DDS-Baustein (3) zur Erzeugung einer Grundfrequenz des modulierten Frequenzreferenzsignals vorgesehen ist, die wesentlich größer als ein Sendkanal-Rasterabstand ist.

7. Vorrichtung nach Anspruch 1,
gekennzeichnet durch eine das Trägersignal erzeugende, insbesondere einen Quarzoszillator umfassende Oszillatoreinrichtung (6a) und eine Ausgangssignale des DDS-Bausteins (3a) empfangende, insbesondere zur Addition oder Subtraktion vorgesehene Mischereinrichtung (10).

8. Vorrichtung nach Anspruch 8,
dadurch gekennzeichnet,
daß der DDS-Baustein (3a) mit der Mischereinrichtung (10) über ein Bandpaßfilter (2a) verbunden ist.

9. Vorrichtung nach Anspruch 7 oder 8,
dadurch gekennzeichnet,
daß die Oszillatoreinrichtung (6a) mit der Mischereinrichtung (10) über ein Bandpaßfilter (11) verbunden ist.

10. Vorrichtung nach einem der Ansprüche 7 bis 9,
dadurch gekennzeichnet,
daß die Mischereinrichtung (10) ausgangseitig über ein Bandpaßfilter (12) mit einem Leistungsverstärker (7a) verbunden ist.

11. Vorrichtung nach einem der Ansprüche 1 bis 10,
dadurch gekennzeichnet,
daß der DDS-Baustein (3,3a) mit einer einen Mikroprozessor umfassenden digitalen Eingabeeinrichtung (9,9a) verbunden ist.

12. Vorrichtung nach einem der Ansprüche 7 bis 11,
dadurch gekennzeichnet,
daß die Oszillatoreinrichtung (6a) einen Frequenzvervielfacher zur Vervielfachung der Frequenz des Quarzoszillators aufweist.

13. Vorrichtung nach Anspruch 11,
dadurch gekennzeichnet,
daß der Mikroprozessor zur Kompensation von Fehlereinflüssen anhand vorab gespeicherter Korrekturwerte oder/und von aus empfangenen Signalen abgeleiteten Frequenzreferenzwerten programmiert ist.

14. Verwendung eines DDS-Bausteins in einer Vorrichtung für die Erzeugung und/oder den Empfang eines modulierten Sendesignals nach einem der Ansprüche 1 bis 13 zur Daten- und/oder Sprachübertragung zwischen mobilen und/oder tragbaren Sendestationen untereinander und/oder zwischen mobilen und/oder tragbaren Sendestationen und festen Sendestationen.
